# EUROPEAN PATENT SPECIFICATION

(11) **EP 1 931 541 B1**
(45) Date of publication and mention of the grant of the patent: **13.01.2016**
(21) Application number: 06816636.2
(22) Date of filing: 10.10.2006
(51) Int. Cl.: B08B 17/02, B60S 1/04, B60S 1/10, B63B 19/02

(54) **AIR-DRIVEN ROTATABLE WINDOW AND METHOD OF ROTATING SAID WINDOW**
LUFTANGETRIEBENES DREHFENSTER UND VERFAHREN ZUM DREHEN DIESES DREHFENSTERS
FENÊTRE ROTATIVE À ENTRAÎNEMENT PNEUMATIQUE ET PROCÉDÉ DE ROTATION DE CETTE FENÊTRE

(30) Priority: 07.10.2005 US 724697 P
(43) Date of publication of application: 18.06.2008
(73) Proprietor: PROTO-DESIGN, INC., Redmond WA 98052 (US)
(72) Inventor: BLECHSCHMIDT, Wolf, J., Redmond, Washington 98052 (US)
(74) Representative: Graf von Stosch, Andreas
(86) International application number: PCT/US2006/039560
(87) International publication number: WO 2007/044718

(56) References cited:
- FR-A1- 2 332 890
- US-A1- 5 927 010

## Description

### BACKGROUND OF THE INVENTION

### Field of the Invention

Vision improvement devices are provided, and more specifically, rotating devices for maintaining substantially clear visibility through viewing windows.

### Description of the Related Art

The need for maintaining clear visibility through viewing windows has long been recognized, particularly in the shipping industry, the tooling and machining industry, the land vehicle industry and in many other areas where clear visibility through a window is required.

Visibility through a viewing window is commonly impeded when, for example, water and other debris impact the window. In the machining and tooling industry, there is a need to maintain the window through which the work piece is viewed clear of liquid machining lubricant, metal chips, and debris generated during the machining process. However, the windows tend to impede, rather than improve, visibility because the chips scratch the window. Furthermore, the lubricants or other liquids obscure visibility through the window because of their formulation to increase the "wetting" action that results in substantially coating the window.

In the shipping and land vehicle industries, reciprocating wipers have been used to remove water and debris from windows, such as windshields. Windshield wipers do not reciprocate fast enough to maintain a clear view through the window, particularly a ship's window, so as to overcome the problem of water collecting on the window.

Rotating windows have been used to overcome some of the above-noted problems, particularly in the machining and shipping industries. A rotating window places a centrifugal force on an object that comes into contact with the window and slings the object immediately off the rotating window.

Conventional rotating windows are driven by electric motors. Electrically driven rotating windows suffer from several drawbacks. In the high moisture environments in which rotating windows are typically used, components such as motor poles may corrode, causing the motor to fail and requiring that the motor be replaced. If the motor fails while in use, the motor or the entire rotating window must be replaced. If the rotating window is on a machining assembly, the machine assembly typically is taken out of service for a period of time until replacement is completed.

Air-driven windows have been used to overcome some of the above-mentioned problems. Existing air-driven windows are driven in the manner of an anemometer by directing air toward shallow cups or other features that catch the air to spin the window. Existing air-driven windows, however, have several shortcomings. One problem is that air passing into and out of the shallow grooves creates substantial noise that may interfere with a user's ability to concentrate on the task at hand, such as piloting a vehicle or completing a machining operation.

A further problem with conventional air-driven windows is that they are not efficient. One such inefficiency comes from air that may reflect from various surfaces of the grooves so as to impede the flow of air entering and exiting the grooves, reducing the overall propulsive force of the air on the rotating window. Once the air has passed out of the grooves, the air remains trapped in the region between the rotating window and a stationary window to which the rotating window is attached. The trapped air creates friction with the rotating window, reducing the rotational speed and effectiveness of the window. U.S. Patent No. 5,927,010, issued July 27, 1999, which discloses a device in according with the preamble of claim 1 and a method in accordance with the preamble of claim 12 , addressed this inefficiency.

Another inefficiency comes from the design of the features that interact with the air to spin the window, such as shallow cups or buckets. Improvements may be made to these features in order to increase the efficiency of the air-driven window by changing the design of the features that more effectively interact with air to spin the window. Other improvements may be made to the air delivery system to increase the efficiency of the air-driven window, such as changing the location and number of channels that deliver air to the features.

### BRIEF SUMMARY OF THE INVENTION

An improved air-driven rotating window in accordance with claim 1 is provided.

In a preferred embodiment, the gas supply passageway further comprises an infusion plate in fluid communication with the outlet aperture. The infusion plate may comprise a plurality of air exit channels that are configured to receive airflow from the gas source and direct the gas entering the infusion plate to the plurality of air-reactive elements proximate the air exit channels, thereby creating a force that rotates the window, whereby as the window spins, each air-reactive element moves past the air exit channels. As the gas interacts with each air-reactive element, the window is driven in a circular fashion. In preferred embodiments, the infusion plate has one, two, three or more air exit channels, and a plurality of infusion plates fluidly connected to a plurality of outlet apertures may be used. A portion of the air exit channels may be angled to deliver air to the air reactive elements in a direction more in line with the rotating window's direction of travel.

In a preferred embodiment of the infusion plate, each air exit channel has a substantially straight proximate portion, a substantially straight distal portion, and a curved portion therebetween. The gas passes from the gas source to the proximate portions of the air exit channels and then flows through the curved portions to the distal portions of the air exit channels where it exits the channels and interacts with the air-reactive elements. The air exit channels may be configured to direct the gas passing therethrough at an acute angle relative to an imaginary line extending from a longitudinal axis of the substantially straight proximate portion. The acute angle may be from about 40° to about 80°. The air exit channels may be configured to direct the gas passing therethrough substantially tangential to the rotating window's outer portion. The air exit channels may have substantially similar depths and widths, and may have different depths and widths.

According to the invention the air passes over and under the air-reactive elements creating an aerodynamic lift force on the rotating window's outer edge portion, thereby spinning the rotating window. The air-reactive elements each may have an upper cambered surface and a lower cambered surface. The upper and lower cambered surfaces cooperate to create the force spinning the rotating window in the form of a lift force when air from the air exit channels interacts with the upper and lower cambered surfaces of the air-reactive elements. In a preferred embodiment the upper cambered surface has a greater radius of curvature than a radius of curvature of the lower cambered surface. In a preferred embodiment, the air-reactive elements are airfoils. The attitude of the air-reactive elements may vary depending on a desired angle of attack between the airflow and the air-reactive elements. As the rotating window spins, it centrifugally slings off debris contacting the rotating window.

In a realization, a rotatable viewing assembly connectable to a gas source is provided. The rotatable viewing assembly comprises a support base, a gas delivery passageway, and a viewing screen rotatably connected to the support base. The gas delivery passageway comprises an inlet portion configured to be in fluid communication with the gas source and an outlet portion in fluid communication with the inlet portion, wherein the gas delivery passageway is configured to direct a gas flow therethrough away from the outlet portion. The viewing screen comprises a center portion, an outer edge portion radially outward from the center portion, and at least one air-reactive element connected to the outer edge portion, wherein the air-reactive element comprises an upper cambered surface and a lower cambered surface positioned to interact with at least a portion of the gas directed from the outlet portion of the gas delivery passageway when the outlet portion is adjacent the air-reactive element, and wherein a portion of the gas directed from the outlet portion can pass over the upper cambered surface and a portion of the gas directed from the outlet portion can simultaneously pass over the lower cambered surface, thereby generating a lift force on the outer edge portion to rotate the viewing screen relative to the support base.

Not in accordance with the invention a viewing assembly connectable to a gas source is provided, the viewing assembly comprising a means for viewing, a means for support mounted to the means for viewing, a means for delivering gas fluidly connected proximate the means for support, and a means for rotating the means for viewing relative the means for support. The means for rotating is configured to be driven by a lift force generated by gas delivered by the means for delivering gas when at least a portion of the delivered gas interacts with the means for rotating.

A method of rotating a viewing assembly in accordance with claim 12 is also provided.

These and other aspects will become evident upon reference to the following detailed description and attached drawings.

### BRIEF DESCRIPTION OF THE SEVERAL VIEWS OF THE DRAWINGS

FIG. 1 is a rear isometric view showing a rotating viewing assembly in accordance with the invention, the viewing assembly being shown mounted to a viewing window through which a user is looking.
FIG. 2A is an enlarged front elevational view of the rotating assembly of FIG. 1 with a rotating window partially cut away to show a support base.
FIG. 2B is an enlarged front elevational view of the rotating assembly of FIG. 1 with a rotating window cut away.
FIG. 2C is an enlarged front elevational view of the rotating assembly of FIG. 1 with a rotating window cut away, and a blow-up cut away view of a section of the rotating assembly having an infusion plate.
FIG. 3 is an enlarged partial isometric view of the assembly of FIG. 1.
FIG. 4A is an enlarged back view of a portion of the assembly of FIG.1 having an annular frame with air-reactive elements and an infusion plate.
FIG. 4B is an enlarged view of an air exit channel.
FIG.5 is an enlarged view of the assembly in FIG. 1 showing an annular frame with air-reactive elements and an infusion plate.
FIG.6A is an enlarged view of an air-reactive element.
FIG. 6B is an enlarged view of an air-reactive element and airflow from an air exit channel.
FIGS. 6C, 6D, and 6E depict various air-reactive elements having various attitudes.
FIG. 7A is an enlarged cross-sectional view taken substantially along line 4-4 of FIG. 2 showing an interconnection of a rotating window, a support base, and a central hub.
FIG. 7B is a cross-sectional view taken substantially along the line A-A of FIG. 2C showing an alternate rotating viewing assembly.
FIG. 8A is a cross-sectional view of an alternate rotating viewing assembly with a rotating viewing assembly being shown removably attached to a mounting plate.
FIG. 8B is a cross-sectional view of the mounting plate of FIG. 5A with a removable cover installed in place of a rotating viewing assembly.

### DETAILED DESCRIPTION OF THE INVENTION

Described herein is an improved gas-driven rotatable viewing assembly for maintaining clear visibility through a portion of a stationary window to which the assembly is attached. The assembly is driven in an efficient manner by air or another gas, which at the same time substantially prevents debris from contaminating the assembly.

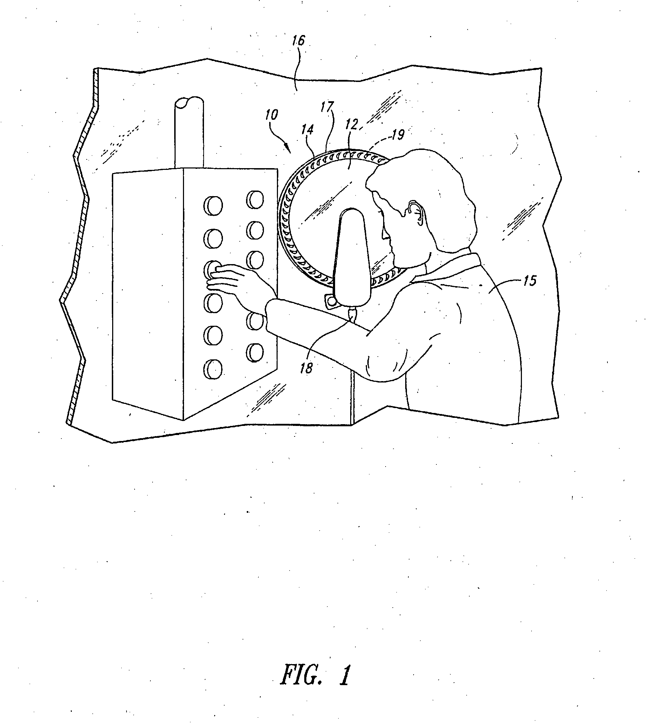

A rotating viewing assembly 10 in accordance with the invention is shown in the drawings for purposes of illustration. As seen in FIG. 1, the rotating viewing assembly 10 includes a support base 14 that is fixed to a stationary window 16 on an inside surface facing away from a user 15, so the window is between the rotating viewing assembly 10 and the user.

The support base 14 rotatably supports an air-driven viewing screen or rotating window 12 that spins relative to the support base 14. The rotating window 12 includes a plurality of air-reactive elements 19 formed in an annular frame 17 that defines the rotating window's outer periphery. A means for viewing comprises the rotating window 12; a means for support for the rotating window 12 comprises the support base 14; a means for rotating the rotating window 12 relative the support base 14 comprises a plurality of the air-reactive elements 19.

As used herein, an air-reactive element includes, but is not limited to, a structure having an upper cambered surface and a lower cambered surface, wherein the upper and lower cambered surfaces cooperate together to generate a lift force when an airflow is passed over the upper and lower cambered surfaces; an airfoil; a structure configured to generate a lift force from a pressure differential in response to an airflow over the structure; or a structure configured to redirect airflow and generate an aerodynamic lift force in response to the airflow. As used herein, cambered surface includes, but is not limited to, a surface with an upward curve; a surface with a convexity; or a surface with a curvature of an airfoil. The air-reactive elements of the current disclosure are unlike U.S. Pat. No. 5,927,010, which uses buckets of a generally semi-circular shape positioned around an annular frame, where the buckets redirect airflow by approximately 180° thereby creating a force on the annular frame. In contrast, the present air-reactive elements create a lift force in response to airflow over a plurality of cambered surfaces, or create an aerodynamic lift force similar to an airfoil when the air-reactive element interacts with airflow.

The air-reactive elements 19 interact with compressed air or other gas that passes from a supply hose 18 through a portion of the support base 14. The air-reactive elements 19 are shaped and sized such that the compressed air interacting with or passing under and over the air-reactive elements 19 causes the rotating window 12 to spin relative to the support base 14 at a high rate of speed. Objects contacting the spinning rotating window are slung off the screen by centrifugal force. Accordingly, the user 15 shown in FIG. 1, looking through the stationary window 16 and the rotating window 12 while operating a control panel, has a substantially clear and unobstructed view through the rotating viewing assembly 10.

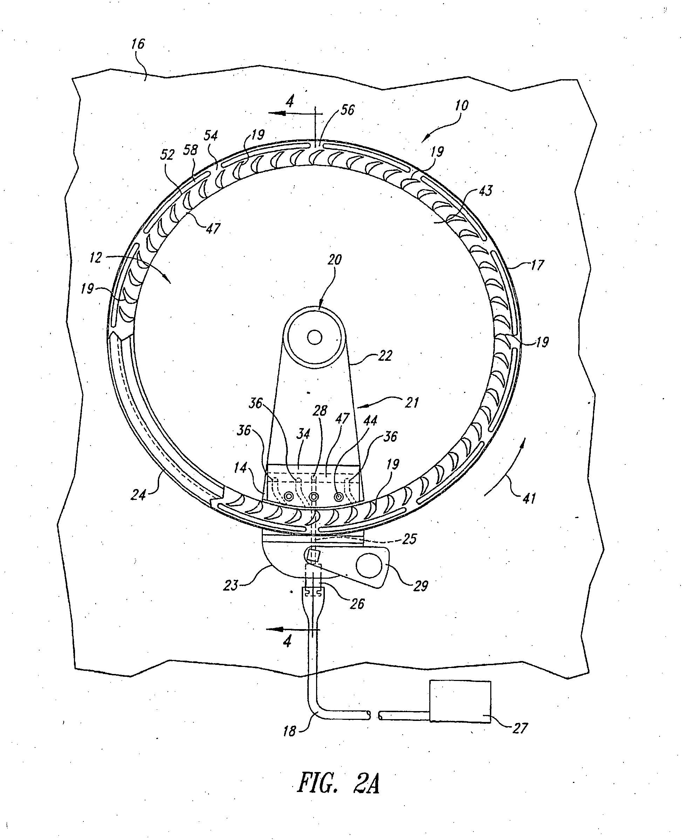

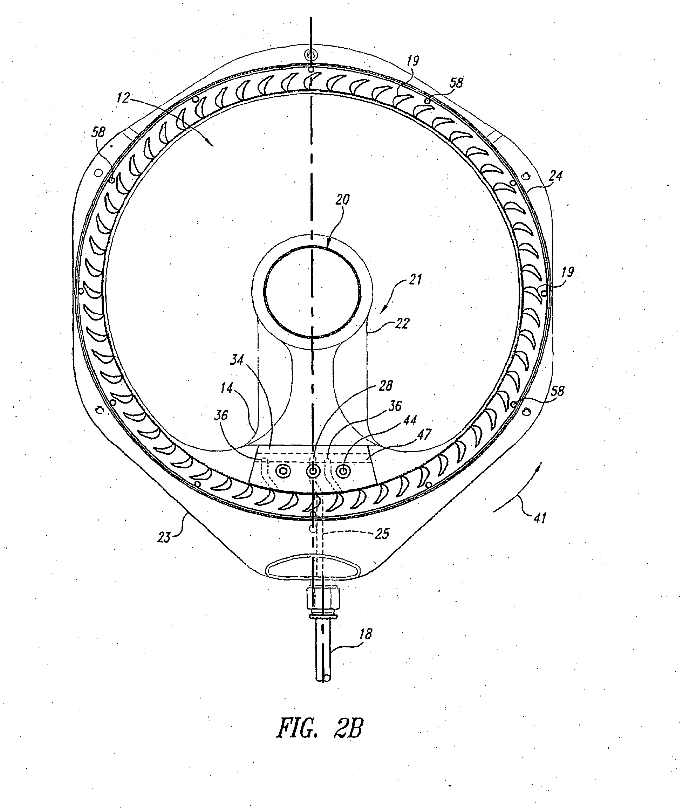

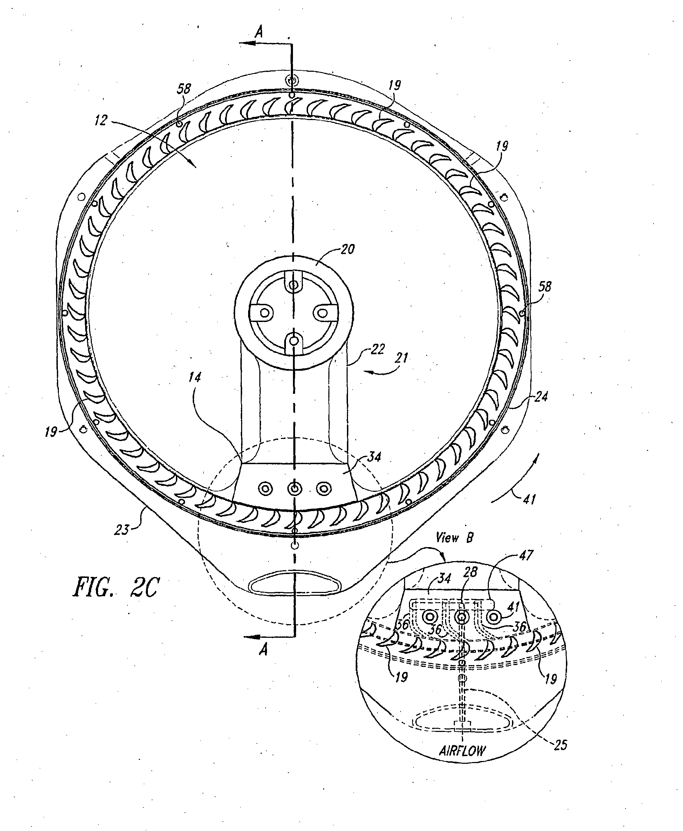

As seen in FIGS. 2A, 2B and 2C, the support base 14 includes an annular base ring 24 and a base-center portion 21, each of which are adhered or otherwise fixed to the window 16. The base-center portion 21 has an outer portion 23 connected to the base ring 24, and the base-center portion 21 extends radially inwardly to a hub housing portion 22. The hub housing portion 22 retains a hub assembly 20 that connects the base-center portion 21 to a center portion of the rotating window 12 while permitting the rotating window to spin relative to the support base 14.

The outer portion 23 of the base-center portion 21 includes an air supply passageway 25 that directs air from the supply hose 18 to the rotating window 12 to spin the rotating window. The air supply passageway 25 has a hose connector 26 at a radially outward end and an air outlet aperture 28 at the radially inward end. The hose connector 26 connects to the supply hose 18, which is in turn connected to a compressor 27, shown schematically in FIG. 2A, that provides compressed air Although this exemplary realization uses compressed air, such as is commonly available in machine shop environments, alternate realizations use other compressed gases to drive the rotating window 12.

A control valve 29 regulates the flow of air from the compressor 27 through the hose 18 and into the air supply passageway 25. When the control valve 29 is open, air is permitted to pass into the air supply passageway 25 and out through the outlet aperture 28. The control valve 29 can be used to modify the characteristics of the airflow to the rotating window 12 so as to control the rotational speed and torque of the rotating window.

As seen in FIGS. 2A, 2B and 2C, the air outlet aperture 28 is positioned to direct the air from the air supply passageway 25 into an infusion plate 34 having a plurality of air exit channels 36. A air diffuser 47 (which is an air filter in a realization is positioned between the infusion plate 34 and the air outlet aperture 28. The plurality of air exit channels 36 are positioned to direct air entering the infusion plate 34 to the plurality of air-reactive elements 19, creating a force that rotates the window, whereby as the window spins each air-reactive element 19 moves past the air exit channels 36. As the air interacts with each air-reactive element 19, the rotating window 12 is driven in a counter-clockwise direction indicated by arrow 41. One means for delivering gas comprises the infusion plate 34.

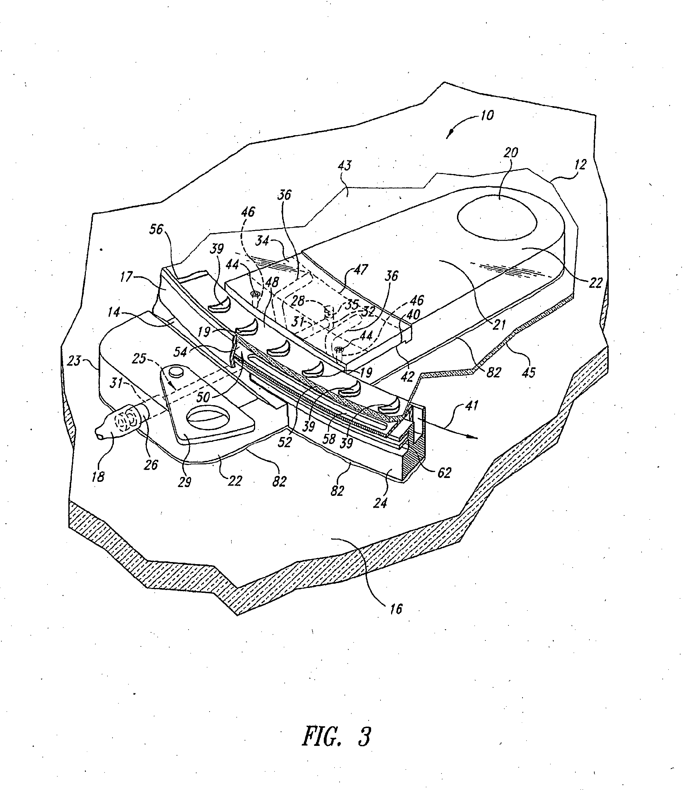

Details of the air supply passageway 25 and the air-reactive elements 19 are shown in FIG. 3. The air supply passageway 25 includes a radial portion 31 that extends radially inward through the base-center portion 21 from the hose connector 26 toward the hub housing portion 22. The radial portion 31 is connected to an axial portion 32 at a position radially inward of the base ring 24 and the rotating window's annular frame 17. The axial portion extends axially toward the rotating window 12. Accordingly, the air supply passageway 25 has a 90° bend between the radial and axial portions 31 and 32. Other configurations are possible.

The axial portion 32 contains the air outlet aperture 28 that throttles the flow of gas passing therethrough to a working pressure. In one realization, the air outlet aperture 28 is a fixed orifice of a selected size. In an alternate realization, the air outlet aperture 28 is housed in a ring 35 that is removable from the axial portion 32 for maintenance or replacement. For example, the ring 35 can be replaced with a ring having an air outlet aperture 28 of a different size so as to adjust the pressure of the gas flowing through the air supply passageway 25. Accordingly, the air outlet aperture 28 can be modified to change the characteristics of the airflow to the rotating window 12 so as to control the rotational speed and torque of the rotating window.

Such modification to the airflow results in a substantially linear relationship to the torque of the rotating window 12. As an example, if the airflow to the rotating window 12 is doubled, the torque is approximately doubled. Therefore, the torque of the rotating window 12 is easily controlled or established by selectively controlling the airflow to the rotating window.

The axial portion 32 of air supply passageway 25 is fluidly connected at one end to the infusion plate 34 and is in fluid communication with the air exit channels 36. In a realization an air diffuser (or air filter) 47 is positioned between the infusion plate 34 and the axial portion 32, where the air diffuser 47 delivers air from the air outlet aperture 28 to the air exit channels 36. The air exit channels 36 are downstream of the air outlet aperture 28 and direct the air onto the air-reactive elements 19. In a realization, the air exit channels 36 are angled to redirect the air flowing therethrough to the air-reactive elements 19 at an angle more closely aligned with the travel direction 41 of the annular frame 17.

As seen in FIGS. 2C and 3, the infusion plate 34 comprises a plurality of air exit channels 36 and is connected to the base-center portion 21 adjacent to the rotating window's annular frame 17. In a realization, the air exit channels 36 are formed by a groove machined into an undersurface 40 of the infusion plate 34. The infusion plate 34 is attached to the base-center portion 21 such that the undersurface 40 forms a gas-tight seal with a corresponding mounting surface 42 of the base-center portion. Accordingly, the air exit channels 36 are defined by walls of the grooves and by the mounting surface 42.

The infusion plate 34 is removably attached to the base-center portion 21 with mounting screws 44 that are threaded into holes 46 in the base-center portion 21. In alternate realizations, other means are used to removably secure the infusion plate 34 to the base-center portion 21. The removable infusion plate 34 allows easy access to the air diffuser 47 or the air outlet aperture 28 so as to clean the orifice occupied by the air diffuser 47 or replace the outlet aperture 28. The removable infusion plate 34 is also easily replaced with another infusion plate 34 having one or more air exit channels 36 that are of different shapes or sizes. Accordingly, replacing the infusion plate 34 easily modifies characteristics of the airflow to the air-reactive elements 19.

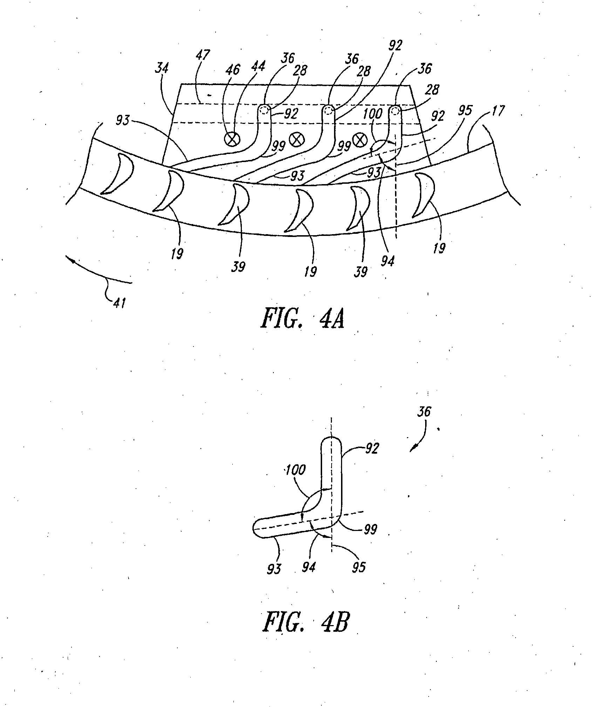

In exemplary realizations depicted in FIGS. 2A, 2B, 2C, 3, 4A and 4B, the air exit channels 36 of the infusion plate 34 are shaped to direct the air from one or more air outlet apertures 28 in a selected direction toward the air-reactive elements 19 as the air-reactive elements 19 move past the air exit channels 36. As seen in FIGS. 4A and 4B, in a realization each air exit channel 36 has a substantially straight proximate portion 92, a curved portion 99, and a substantially straight distal portion 93. The air passes from the air outlet apertures 28 to the proximate portions of the air exit channels 36 and then flows through the curved portions 99 to the distal portions 93 where it exits the channels 36 and interacts with the air-reactive elements 19.

In some realizations, the air exit channels 36 are configured to direct the air passing therethrough at an acute angle 94 that is formed by an intersection of a longitudinal axis of the substantially straight distal portion 93 and an imaginary line 95 extending from a longitudinal axis of the substantially straight proximate portion 92. The configuration of the air exit channels 36 is also defined by an obtuse angle 100 formed by an intersection of the longitudinal axis of the proximate portion 92 and the longitudinal axis of the distal portion 93. In various realizations, the acute angle 94 varies from about 40° to about 80° (and the obtuse angle 100 correspondingly varies from about 140° to about 100°). In specific realizations, the acute angle 94 is about 40, 45, 50, 55, 60, 65, 70, 75, and 80°. In a realization, the air exit channels 36 are configured to direct the air passing therethrough substantially tangential to the rotating window's annular frame 17. In realizations, the air interacting with the air-reactive elements 19 is closely aligned with the travel direction 41 of the annular frame 17 so that the air and air-reactive element interaction imparts force to the rotating window 12 primarily in the travel direction, thereby substantially maximizing the rotating window's rotational speed.

In alternate realizations, airflow is provided to the air-reactive elements 19 by one, two (FIGS. 2A, 2B and 2C), three (FIGS. 3 and 4A), or more air exit channels 36, and each of the air exit channels 36 align with separate air-reactive elements 19. Providing two, three, or more air exit channels 36 in a single infusion plate 34 can form the additional air exit channels 36. Alternatively, separate infusion plates 34 are used. In a realization another realization having multiple infusion plates 34, each infusion plate is couplable to a separate air outlet aperture 28. The additional outlet apertures 28 allow for an increased volume of airflow provided to the rotating window, thereby increasing the torque of the window in accordance with a linear relationship. In another realization, a single air outlet aperture 28 provides air to multiple infusion plates 34. Also, in other realizations one infusion plate 34, one or more air outlet apertures 28 are communicatively coupled to the infusion plate 34. In one realization, shown in FIG. 4A, an air outlet aperture 28 is communicatively coupled to each air exit channel 36.

In realizations, the air exit channels 36 have different depths and widths. In one realization, three air exit channels 36 are configured with about 70° angles 92 and a channel width of about 2.36 mm (about 0.093") and a channel depth of about 0.76 mm (about 0.030"). Depending on the application, environment, and configuration of the air-driven window, different air exit channel depths, widths, and acute angles are used.

Realizations of the infusion plate 34 are an improvement over the air delivery system described in U.S. Patent No. 5,927,010. In realizations having multiple air exit channels 36, air is more effectively delivered to the air-reactive elements 19. For example, in a realization depicted in FIGS. 2C and 4, three air exit channels 36 increase the opportunity for airflow to interact with one or more air-reactive elements 19 thereby increasing the efficiency of the air-driven window.

As seen in FIGS. 3, 4A, and 5, the rotating window 12 includes an annular frame 17 that has a shape corresponding to the shape of the support base's base ring 24 (shown in FIG. 3). The annular frame 17 has a support surface 39 formed by distal portions of the air-reactive elements 19 that face away from the base ring 24. The annular frame 17 supports a transparent or substantially transparent pane 43 (shown in FIG. 3) on the support surface 39. The pane 43 extends across the annular frame 17 parallel to the stationary window 16 (shown in FIG. 3) and connects to the hub assembly 20, which is connected to the base-center portion 21. Accordingly, the pane 43 and the annular frame 17 spin relative to the support base 14 about an axis extending through the hub assembly 20.

In a realization the air-reactive elements 19 are positioned around the annular frame 17 such that the air-reactive elements 19 define the upper surface 39 of the annular frame 17. The air-reactive elements 19 are machined directly into the annular frame 17 so as to minimize the potential for gas leaks between the air-reactive elements 19 and the annular frame 17. In one realization, the air-reactive elements 19 are machined into the annular frame 17 and are spaced equally apart. In a realization, the diameter of the annular frame is about 203.2 mm (about 8") and there are about 60 air-reactive elements 19 spaced around the annular frame 17. Many other realizations and configurations are possible. In other realizations, the air-reactive elements 19 are separate structures attached to the annular frame 17. When the pane 43 is in place, a lower surface 45 of the pane is sealably adhered to the annular frame's upper surface 39 and extends over each of the air-reactive elements 19.

In realizations, the air-reactive elements 19 are positioned substantially in one plane. In alternate realizations, the annular frame 17 has a plurality of air-reactive elements 19 in one plane and a plurality of air-reactive elements in a second plane, such that the air-reactive elements are stacked in different planes. As an example, air-reactive elements 19 could be formed on opposite sides of the annular frame 17. This alternate realization also has one or more outlet apertures 28 that direct air or other gas to each set of air-reactive elements 19. This stacked air-reactive element configuration provides increased torque to the rotating window 12 in accordance with a linear relationship.

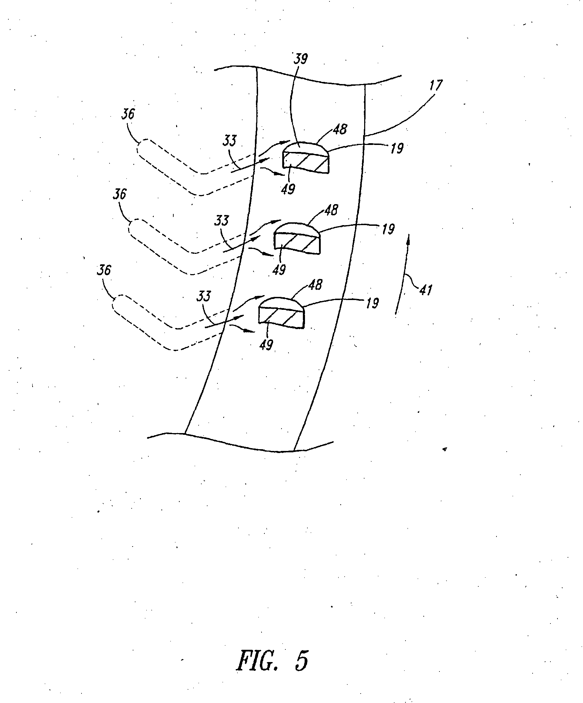

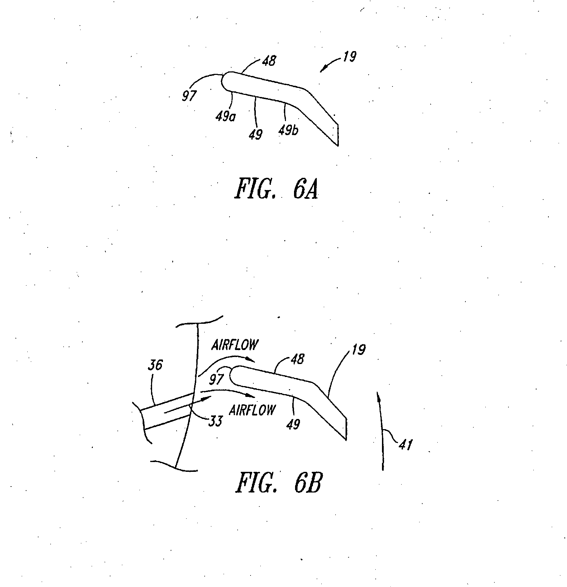

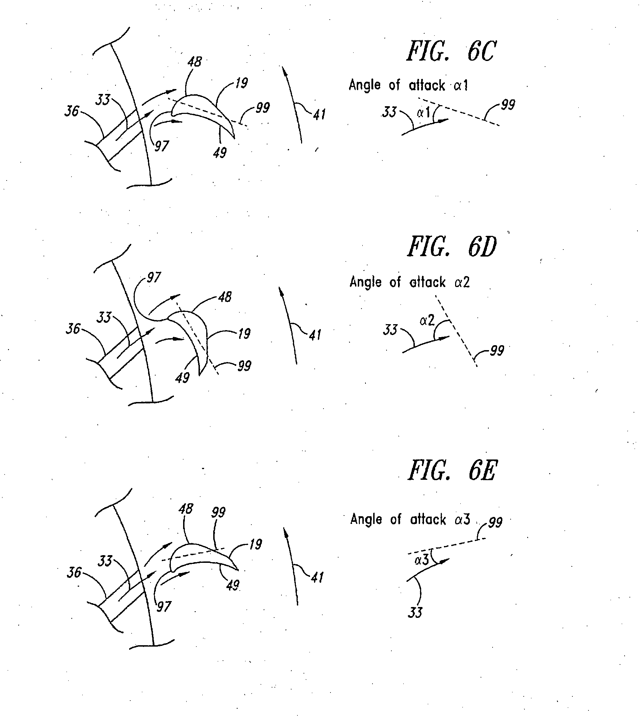

Details of the air-reactive elements are provided in FIG. 5, 6A, 6B, 6C, 6D, and 6E. In some realizations, each air-reactive element 19 has an upper cambered surface 48 and a lower cambered surface 49, as seen in FIGS. 2B and 2C. In realizations, each air-reactive element 19 is an airfoil having an upper cambered surface 48 with a first radius of curvature and a lower cambered surface 49 with a second radius of curvature, where the upper cambered surface 48 has a higher curved shape (e.g., a first radius of curvature is greater then the second radius of curvature) than a curved shape of the lower cambered surface 49. Airfoils are well known in the aerodynamic art and have advantageous properties that enable a lift force to be generated when airflow interacts with the airfoil and flows over the upper 48 and lower 49 cambered surfaces. The air-reactive elements 19 are used in combination with airflow 33 to create a lift force on the annular frame 17, thereby spinning the annular frame in the travel direction 41. Various shapes and design choices for airfoils are well known. The airfoil should be selected such that the airflow 33 exiting the air exit channels 36 will flow over the upper cambered surface 48 faster than the airflow over the lower cambered surface 49. This creates a lift force on the air-reactive element 19 from a pressure difference between the upper cambered surface 48 (having a lower proximate pressure) and the lower cambered surface 49 (having a higher proximate pressure). In realizations, the upper cambered surface 48 and the lower cambered surface 49 are each defined by multiple radii of curvature. In a realization, shown in FIG. 6A, the air-reactive element 19 has an upper cambered surface 48 with a radius of curvature of about 0.120 and a lower cambered surface having a radius of curvature of about 0.100 at a proximate end 49a and a radius of curvature of about 0.375 at a distal end 49b. Many other radii of curvature are possible and other realizations have the lower cambered surface 49 configured with a greater radius of curvature than the upper cambered surface 48. Other configurations using a mix of different air-reactive elements are also possible. For example, a realization includes configurations using a mix of different types of air-reactive elements 19, where at least a plurality of the air-reactive elements are airfoils.

As shown in FIGS. 6C, 6D, and 6E, realizations of the air-reactive element 19 may have various attitudes and angles of attack, thereby changing the aerodynamic lift characteristics of the airflow 33 and air-reactive element 19 interactions. The relationship between airflow's angle of attack with an airfoil and lift is well known. By changing the attitude of the air-reactive element 19 (*e.g*., changing the orientation of the airfoil relative to the direction of movement 41 or relative to the airflow direction 33) or by changing the angle 94 by which the air exits the air exit channels 36, the angle of attack with respect to the airflow 33 will change. The optimum attitude will vary according to the airflow 33, the air-driven window configuration (e.g., the air exit channel 36 orientation), and other conditions that affect the movement of the air-driven window. In one realization, shown in FIG. 6C, the air-reactive element 19 has an attitude relative to the airflow 33 such that a leading edge 97 of the air-reactive element 19 extends substantially radially in front of the direction of airflow 33. A first angle of attack α1 is defined by the intersection of the airflow 33 and a chord line 99 of the air-reactive element 19. In another realization, shown in FIG. 6D, the air-reactive element 19 is rotated clockwise relative to the orientation of the air-reactive element 19 in FIG.6C, thereby having a different attitude relative to the airflow 33. The leading edge 97 of the air-reactive element 19 still extends substantially radially in front of the direction of airflow 33, but a second angle of attack α2 defined by the intersection of the airflow 33 and the chord line 99 of the air-reactive element 19 is higher than the first angle of attack α1. In another realization, shown in FIG. 6D, the air-reactive element 19 is rotated counterclockwise relative to the orientation of the air-reactive element 19 in FIG.6C, thereby having a different attitude relative to the airflow 33. The leading edge 97 of the air-reactive element 19 still extends substantially radially in front of the direction of airflow 33, but a third angle of attack α3 defined by the intersection of the airflow 33 and the chord line 99 of the air-reactive element 19 is lower than the first angle of attack α1.

Realizations where the air-reactive elements 19 have upper 48 and lower 49 cambered surfaces (or are airfoils) are a significant improvement over the air-driven rotating window using the buckets described in U.S. Patent No. 5,927,010. In realizations where the air-reactive elements 19 have cambered surfaces or are airfoils, less airflow (and air pressure) is required to achieve the same or greater rotation (rpm). In realizations, air pressure in the range of approximately 241 to 2.76 kPa (approximately 35 to 40 psi) (in one realization 255 kPa (37 psi)) used to turn the air-driven window at approximately 3700 to 3800 rpm where the infusion plate 34 has three air exit channels 36 each configured with about 70° acute angles 94, a channel width of about 2.36 mm (about 0.093"), and a channel depth of about 0.76 mm (about 0.030"). In comparison, the bucket driven rotating window of U.S. Patent No. 5,927,010 barely rotates with an air delivery at 255 kPa (37 psi), and requires over double the air pressure 538 kPa (approximately 78 psi) to rotate the window at about 2300 rpm. Various combinations of air pressure may be used depending on the applications and environment. Given the almost endless combinations of design choices between the air-reactive elements 19 and infusion plate 34 coupled with air pressure or airflow variations, there is no single preferred or best combination.

In a realization, shown in FIG. 3, air exit regions 50 are on the outer circumference of the annular frame 17, where the air exit regions direct the airflow away from the annular frame 17. In the illustrated realization, the air exit region 50 includes an exit aperture 52 that directs the airflow radially outwardly from the air-reactive elements 19 into a circumferential channel portion 54. A series of circumferential channel portions 54 are preferably connected end-to-end, as shown in FIGS. 2A and 3 so as to form a single peripheral channel 56 that extends around the entire periphery of the annular frame 17. Spaced around the peripheral channel 56 are exhaust ports 58 extending axially through the annular frame 17. The exhaust ports are shaped to direct the airflow out of the peripheral channel 56 and away from the annular frame. In another realization shown in FIGS. 2B and 2C, the exhaust ports 58 are a series of circular holes spaced apart in the outer circumference of the annular frame 17.

Although in some realizations of the air-reactive elements 19 direct air radially outwardly to the exhaust ports 58, thereby using the benefit of centrifugal force, alternative realizations of the air-reactive elements 19 direct the air in the opposite direction or along other paths. In one alternate realization, the air-reactive elements 19 are positioned to redirect airflow radially inwardly of the annular frame 17 from an airflow provided by an air outlet aperture 28 and air exit channel 36 combination positioned radially outwardly of the annular frame 17. Accordingly, the air flows radially inwardly and interacts with the air-reactive elements 19 and exits through exhaust ports 58 located in the annular frame 17. The exhaust ports 58 then direct the flow away from the annular frame 17.

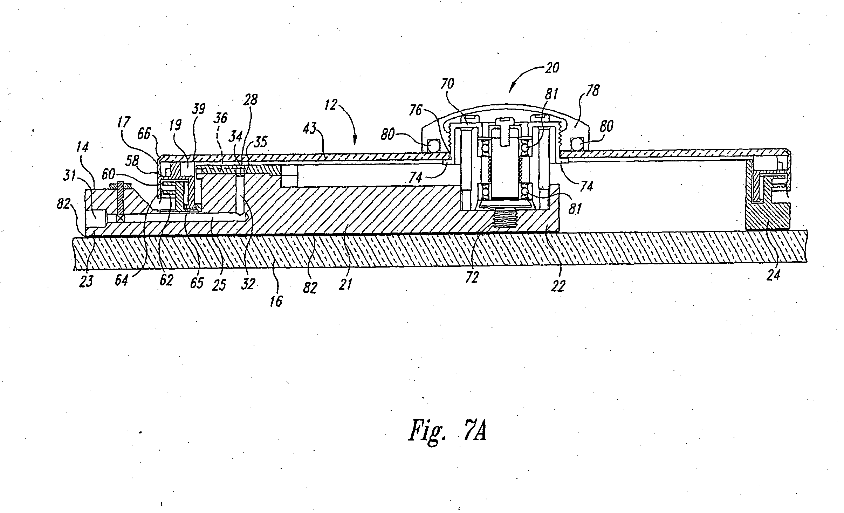

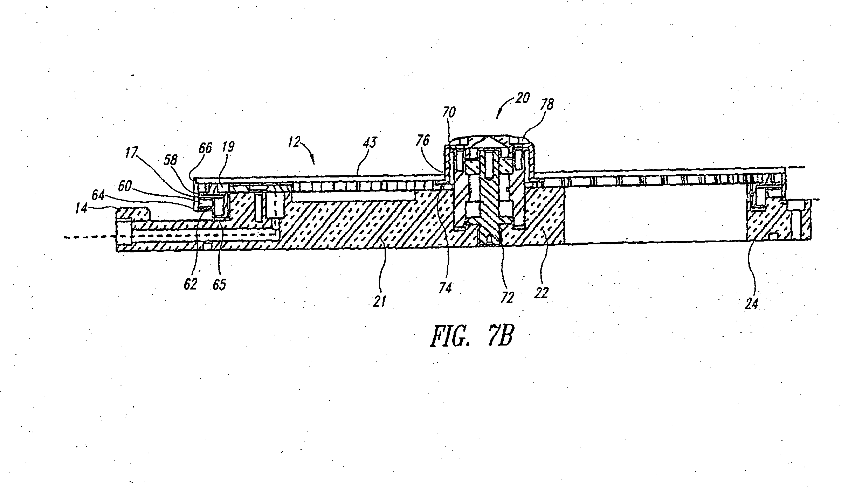

As seen in FIGS. 7A and 7B, the exhaust ports 58 of the exemplary realization are sized and shaped to direct the air toward the base ring 24 of the support base 14 and away from the annular frame 17. The air passes through the exhaust ports 58 into a gap region 60 that is formed between the annular frame 17 and the base ring 24. The air flows through the gap region 60 and away from the annular frame 17. In realization the gap region 60 defines a minimal gap between the annular frame 17 and the base ring 24.

The flow of the air into the gap region 60 is such that the flowing air fills the entire gap region around the rotating window 12. Accordingly, the air in the gap region 60 flows substantially uniformly out of the gap region and away from the rotating viewing assembly. This flow of air out of the gap region 60 creates an air barrier that advantageously prevents liquid or solid debris from entering the gap region and contaminating the space between the pane 43 and the stationary window 16 to which the assembly is mounted. This function is useful where the rotating window 12 is used in a machining or tooling enclosure where lubricants, chips, and other debris could otherwise easily enter the gap region 60 and cause the annular frame 17 to bind against the base ring 24.

In realizations, baffle members 62 or flanges extend radially outwardly from the base ring 24 into the gap region substantially preventing debris from entering the gap region 60. In the exemplary realization, the annular frame 17 includes a lip 64 that is spaced radially outward of the baffle members 62 and that extends axially toward the base ring 24 in proximity to the baffle members to form a labyrinth seal. The labyrinth seal substantially prevents debris from entering the gap region 60 and interfering with rotation of rotating window 12 relative to the support base 14. When the rotating viewing assembly is not in use, such that the air barrier is not provided, the baffle members 62 prevent debris from entering the gap region 60. The baffle members 62 therefore provide supplemental means to prevent debris from entering the gap region 60. If for some reason liquid manages to pass through the gap region 60, a drain hole 65 is provided in the base ring 24 to allow the liquid to drain by gravity away from the base ring and the annular frame 17.

In a realization the periphery of the annular frame 17 includes a retainer portion 66 that projects away from the base ring 24 and is bent radially inwardly to engage the outer edge of the pane 43. The retainer portion 66 works in conjunction with the adhesive to tightly secure the pane 43 to the annular frame 17 so that the air interacting with the air-reactive elements 19 is substantially prevented from leaking out between the annular frame and the pane. The retainer portion 66 is sized to be unobtrusive so as to maximize the area of the pane 43 available for viewing.

The pane 43 and annular frame 17 are together rotatably supported relative to the base ring 24 by the hub assembly 20. The hub assembly 20 includes a hub body 70 attached with a threaded attachment shaft 72 to the hub housing portion 22 of the base-center portion 21. The hub body 70 includes a hub rim 74 which projects underneath an inner portion 76 of the pane 43. A hubcap 78 is threadably attached to the hub body 70 so as to clamp the inner portion 76 of the pane 43 between the hub rim 74 and the hubcap 78. A lower edge of the hubcap 78 includes an O-ring 80 that seals against the pane 43 to prevent debris from entering the hub assembly 20.

Ball bearings 81 in the hub body 70 allow smooth rotational motion of the hubcap 78, pane 43, and hub rim 74 relative to the hub housing 22. In other realizations other means are used to provide a low-friction rotational connection between the rotating window 12 and the support base 21.

The support base 14 is affixed to the window 16 by an adhesive pad 82 having substantially the same footprint as the support base. Accordingly, the adhesive pad 82 is sandwiched between the window 16 and the base ring 24 and the base-center portion 21. In a realization, the adhesive pad 82 is a double-sided adhesive backed tape comprising an acrylic, high adhesion bonding material. A primary advantage of this securing method is that there is no need to cut a hole in the window 16 in order to mount the rotating viewing assembly 10 Thus, the structural integrity of the window 16 remains unchanged. This is useful in tooling and machining applications where, for example, milling machines inside the enclosure constantly throw material, such as coolant, oil, chips and fragments of metal, toward the window 16 of the enclosure.

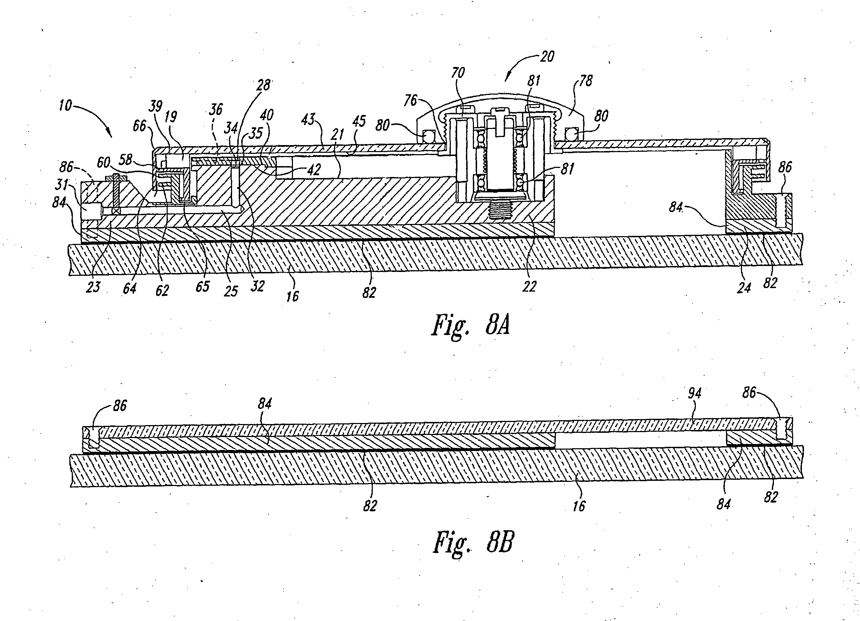

In an alternate realization shown in FIGS. 8A and 8B, the support base 14 is removably attached to a mounting plate 84, which has substantially the same footprint as the support base and is fixedly attached to the window 16 with the adhesive pad 82. The support base 14 is releasably attached to the mounting plate 84 by a plurality of conventional threaded fasteners 86 that extend through the base ring 24 and the base-center portion 21. Accordingly, the rotating viewing assembly 10 can be easily and quickly removed from the mounting plate 84 upon removing the fasteners 86. The removed rotating viewing assembly 10 can then be easily replaced with a new assembly, for example, as the removed assembly undergoes routine maintenance.

As seen in FIG. 8B, a cover 94 is removably attachable to the mounting plate 84 when the rotating viewing assembly 10 is removed and not immediately replaced by another assembly. The cover 94 protects the window 16 and mounting plate 84 from damage and contamination when the rotatable viewing assembly 10 is removed. In the illustrated realization, the cover 94 is attached to the mounting plate 84 with conventional threaded fasteners 86, although other realizations use other known attachment devices.

An advantage of the removable attachment between the rotatable viewing assembly 10 and the mounting plate 84 is that the rotatable viewing assembly is removable without having to break an adhesive bond. The removable feature is also advantageous because it permits rotatable viewing assemblies 10 to be stored or to be moved to various mounting plates 84. For example, realizations for an enclosure surrounding a machining tool has several windows 16, only one of which provides an optimal view of the machining operation at any one time. Realizations allow a plurality of relatively inexpensive mounting plates 84 to be positioned on each window 16, and a single rotating viewing assembly 10 is mountable to a selected one of the mounting plates 84 on the window that provides a view of the selected machining operation. When the nature of the machining operation changes such that a different window 16 provides the optimal view, realizations of the rotating viewing assembly 10 are movable to the appropriate mounting plate 84.

Furthermore, during times when the window 16 is exposed to harsh conditions, but the services of the rotating viewing assembly 10 are not required, realizations of the rotating viewing assembly are removable for storage in a remote location so as minimize the exposure to the harsh conditions. Upon removal of the rotating viewing assembly 10, the removable cover 94 is installed on the mounting plate 84 to protect the window 16 and mounting plate from the harsh conditions.

Although the rotating viewing assembly 10 is shown installed on a pre-existing stationary window 16, realizations of the viewing assembly are usable in a window assembly that provides a viewing port in a solid, non-transparent material, such as a metal housing containing a machining tool. In such an application, the rotating viewing assembly 10 is secured to a panel of safety glass, which is mounted in an aperture formed in the metal housing. Accordingly, the window assembly creates a viewing space that is enhanced by the rotating viewing assembly 10.

In another installation, the rotating viewing assembly 10 is used on the window of a housing through which a camera or other viewing device positioned inside the housing monitors activity outside of the housing. The environment outside the housing may include adverse conditions such as rain, snow, or chemical contamination. Accordingly, the rotating viewing assembly 10 provides a substantially clear view through the window regardless of the conditions outside of the housing.

From the foregoing, it will be appreciated that various modifications may be made without deviating from the scope of the invention. Accordingly, the invention is not limited except as by the appended claims.

## Claims

1. A rotatable viewing assembly (10) connectable to a gas source, comprising:
a support base (14);
a gas delivery passageway (25) comprising an inlet portion configured to be in fluid communication with the gas source and an outlet portion in fluid communication with the inlet portion, the gas delivery passageway (25) configured to direct a gas flow therethrough away from the outlet portion; and
a viewing screen (12) rotatably connected to the support base (14) and having a center portion (21), an outer edge portion (23) radially outward from the center portion (21), and at least one air-reactive element (19) connected to the outer edge portion (23); **characterized in that**
the air-reactive element (19) is positioned and oriented on the outer edge portion (23) relative to a direction of the outlet portion of the gas delivery passageway (25) such that a portion of the gas flow is directed over both an upper surface (48) and a lower surface (49) of the air-reactive element (19) simultaneously when the outlet portion is adjacent the air-reactive element (19), a curvature of the upper surface (48) differing from a curvature of the lower surface (49) such that the gas flow generates a pressure differential between the upper surface (48) and lower surface (49) to create a lift force on the air-reactive element (19) and hence outer edge portion (23) to rotate the viewing screen (12) relative to the support base (14).

2. The viewing assembly (10) of claim 1 wherein the gas delivery passageway (25) comprises an infusion plate (34), the infusion plate (34) comprising the inlet portion, the outlet portion, and a curved portion positioned therebetween, wherein the inlet portion, the curved portion and the outlet portion form a fluidly coupled air exit channel (36).

3. The viewing assembly (10) of claim 2, wherein the inlet portion and outlet portion are each substantially straight, wherein an intersection of a longitudinal axis of the inlet portion and a longitudinal axis of the outlet portion forms an obtuse angle (100).

4. The viewing assembly (10) of claim 3 further comprising a plurality of air-reactive elements (19), the infusion plate (34) comprising a plurality of air exit channels (36) configured to deliver gas from the gas source to interact with the plurality of air-reactive elements (19).

5. The viewing assembly (10) of claim 4 further comprising a gas aperture (28) coupleable to the gas source and in fluid communication with the infusion plate (34).

6. The viewing assembly (10) of claim 5 wherein the gas aperture (28) is substantially perpendicular to the viewing screen (12) and the air exit channels (36) are substantially parallel to the viewing screen (12).

7. The viewing assembly (10) of claim 6 further comprising at least one exhaust port (58) positioned along the outer edge portion (23) of the viewing screen (12), wherein the at least one exhaust port (58) is configured to exhaust at least a portion of the gas delivered through the air exit channels (36).

8. The viewing assembly (10) of claim 7 wherein at least a portion of the plurality of air-reactive elements (19) are substantially coplanar.

9. The viewing assembly (10) of claim 8 wherein the viewing screen (12) comprises:
a rim (74) having a first surface proximate the support base (14) and a second surface opposite the first surface, the plurality of air-reactive elements (19) being formed in the rim (74); and
a transparent pane (43) securely retained on the rim (74) and positioned adjacent the second surface.

10. The viewing assembly (10) of claim 1 wherein the air-reactive element (19) comprises an airfoil.

11. The viewing assembly (10) of claim 1 wherein a portion of the upper surface (48) has a first radius of curvature and a portion of the lower surface (49) has a second radius of curvature, wherein the first and second radii of curvature are different.

12. A method of rotating a viewing assembly (10) comprising:
providing a viewing assembly (10) comprising an air-reactive element (19),
providing a gas flow towards the air-reactive element (19) to rotate the viewing assembly (10); and
providing a gas outlet configured to receive at least a portion of the gas flow, wherein the gas outlet exhausts at least a portion of the gas flow from the viewing assembly (10); **characterized in that**
providing a gas flow towards the air-reactive element (19) to rotate the viewing assembly (10) includes providing a gas flow over an upper surface (48) and a lower surface (49) of the air-reactive element (19) simultaneously, a curvature of the upper surface (48) differing from a curvature of the lower surface (49) such that the gas flow generates a pressure differential between the upper surface (48) and lower surface (49) to create a lift force on the air-reactive element (19) and rotate the viewing assembly (10).

13. The method of claim 12 wherein the air-reactive element (19) comprises an airfoil.

## Patentansprüche

1. An eine Gasquelle anschließbare drehbare Sichtvorrichtung (10), umfassend:
eine Trägerbasis (14);
einen Gaszufuhrdurchgang (25), umfassend einen Einlassabschnitt, konfiguriert um in fluider Kommunikation mit der Gasquelle zu stehen, und einen Auslassabschnitt, in fluider Kommunikation mit dem Einlassabschnitt, wobei der Gaszufuhrdurchgang (25) konfiguriert ist, um dadurch einen Gasstrom vom Auslassabschnitt weg zu leiten; und
einen drehbar mit der Trägerbasis (14) verbundenen und einen Mittelabschnitt (21) aufweisenden Sichtschirm (12), einen äußeren Randabschnitt (23), der radial von dem Mittelabschnitt (21) nach außen weist, und mindestens ein luftreaktives, mit dem äußeren Randabschnitt (23) verbundenes Element (19); **dadurch gekennzeichnet, dass**
das luftreaktive Element (19) auf dem äußeren Randabschnitt (23) bezüglich einer Richtung des Auslassabschnitts des Gaszufuhrdurchgangs (25) positioniert und orientiert ist, so dass ein Teil des Gasstroms gleichzeitig über sowohl eine obere Oberfläche (48) als auch eine untere Oberfläche (49) des luftreaktiven Elements (19) geleitet wird, wenn der Auslassabschnitt dem luftreaktiven Element (19) benachbart ist, wobei eine Krümmung der oberen Oberfläche (48) sich von der Krümmung der unteren Oberfläche (49) unterscheidet, so dass der Gasstrom ein Druckdifferenzial zwischen der oberen Oberfläche (48) und der unteren Oberfläche (49) erzeugt, um eine Auftriebskraft auf das luftreaktive Element (19) und daher den äußeren Randabschnitt (23) erzeugen, um den Sichtschirm (12) relativ zur Trägerbasis (14) zu drehen.

2. Sichtvorrichtung (10) nach Anspruch 1, wobei der Gaszufuhrdurchgang (25) eine Infusionsplatte (34) umfasst, die Infusionsplatte (34) den Einlassabschnitt, den Auslassabschnitt, und einen dazwischen positionierten gekrümmten Abschnitt umfasst, wobei der Einlassabschnitt, der gekrümmte Abschnitt und der Auslassabschnitt einen fluidgekoppelten Luftaustrittskanal (36) bilden.

3. Sichtvorrichtung (10) nach Anspruch 2, wobei der Einlassabschnitt und Auslassabschnitt jeweils gerade sind, wobei eine Kreuzung einer longitudinalen Achse des Einlassabschnitts und einer longitudinalen Achse des Auslassabschnitts einen stumpfen Winkel (100) bilden.

4. Sichtvorrichtung (10) nach Anspruch 3, ferner eine Vielzahl von luftreaktiven Elementen (19) umfassend, wobei die Infusionsplatte (34) eine Vielzahl von Luftaustrittskanälen (36) umfasst, die konfiguriert sind, um Gas von einer Gasquelle anzuliefern, um mit der Vielzahl von luftreaktiven Elementen (19) zu interagieren.

5. Sichtvorrichtung (10) nach Anspruch 4, ferner eine mit der Gasquelle koppelbare und mit der Infusionsplatte (34) in fluider Kommunikation stehende Gasöffnung (28) umfassend.

6. Sichtvorrichtung (10) nach Anspruch 5, wobei die Gasöffnung (28) senkrecht zum Sichtschirm (12) steht und die Luftaustrittskanäle (36) im Wesentlichen parallel zum Sichtschirm (12) verlaufen.

7. Sichtvorrichtung (10) nach Anspruch 6, ferner mindestens eine entlang des äußeren Randabschnitts (23) des Sichtschirms (12) positionierte Auslassöffnung (58) umfassend, wobei die mindestens eine Auslassöffnung (58) konfiguriert ist, um mindestens einen Teil des durch die Luftaustrittskanäle (36) gelieferten Gases auszustoßen.

8. Sichtvorrichtung (10) nach Anspruch 7, wobei mindestens ein Teil der Vielzahl von luftreaktiven Elementen (19) im Wesentlichen koplanar ist.

9. Sichtvorrichtung (10) nach Anspruch 8, wobei der Sichtschirm (12) umfasst:
eine Fassung (74) mit einer ersten, sich in der Nähe der Trägerbasis (14) befindende Oberfläche und einer zweiten, der ersten Oberfläche gegenüberliegende Oberfläche, die Vielzahl von in der Fassung (74) gebildeten luftreaktiven Elementen (19) und
eine sicher in der Fassung (74) gehaltene und der zweiten Oberfläche benachbart positionierte transparente Scheibe (43).

10. Sichtvorrichtung (10) nach Anspruch 1, wobei das luftreaktive Element (19) ein Luftleitblech umfasst.

11. Sichtvorrichtung (10) nach Anspruch 1, wobei ein Teil der oberen Oberfläche (48) einen ersten Krümmungsradius aufweist und ein Teil der unteren Oberfläche (49) einen zweiten Krümmungsradius aufweist, wobei die ersten und zweiten Krümmungsradien verschieden sind.

12. Verfahren zum Drehen einer Sichtvorrichtung (10), umfassend:
Bereitstellen einer Sichtvorrichtung (10), ein luftreaktives Element (19) umfassend,
Bereitstellen eines Gasstroms in Richtung des luftreaktiven Elements (19), um die Sichtvorrichtung (10) zu drehen; und
Bereitstellen eines Gasauslasses, konfiguriert um mindestens einen Teil des Gasstroms aufzunehmen, wobei der Gasauslass mindestens einen Teil des Gasstroms der Sichtvorrichtung (10) ausstößt, **dadurch gekennzeichnet, dass**
Bereitstellen eines Gasstroms in Richtung des luftreaktiven Elements (19) zum Drehen der Sichtvorrichtung (10) das gleichzeitige Bereitstellen eines Gasstroms über eine obere Oberfläche (48) und eine untere Oberfläche (49) des luftreaktiven Elements (19) einschließt, eine Krümmung der oberen Oberfläche (48) sich von einer Krümmung der unteren Oberfläche (49) unterscheidet, so dass der Gasstrom ein Druckdifferenzial zwischen der oberen Oberfläche (48) und unteren Oberfläche (49) erzeugt, um eine Auftriebskraft auf dem luftreaktiven Element (19) zu erzeugen und die Sichtvorrichtung (10) zu drehen.

13. Verfahren nach Anspruch 12, wobei das luftreaktive Element (19) ein Luftleitblech umfasst.

## Revendications

1. Ensemble de visée rotative (10) pouvant être relié à une source de gaz, comprenant :
une base de support (14) ;
un passage de fourniture de gaz (25) comprenant une partie d'entrée configurée pour être en communication fluidique avec la source de gaz et une partie de sortie en communication fluidique avec la partie d'entrée, le passage de fourniture de gaz (25) étant configuré pour diriger un flux de gaz au travers de celui-ci loin de la partie de sortie ; et
un écran de visée (12) relié de manière rotative à la base de support (14) et présentant une partie centrale (21), une partie d'arête extérieure (23) radialement à l'extérieur de la partie centrale (21) et au moins un élément réactif à l'air (19) relié à la partie d'arête extérieure (23) ; **caractérisé en ce que**
l'élément réactif à l'air (19) est positionné et orienté sur la partie d'arête extérieure (23) par rapport à une direction de la partie de sortie du passage de fourniture de gaz (25) de sorte qu'une partie du flux de gaz soit dirigée à la fois sur une surface supérieure (48) et une surface inférieure (49) de l'élément réactif à l'air (19) simultanément lorsque la partie de sortie est adjacente à l'élément réactif à l'air (19),
une courbure de la surface supérieure (48) différant d'une courbure de la surface inférieure (49) de sorte que le flux de gaz génère un différentiel de pression entre la surface supérieure (48) et la surface inférieure (49) pour créer une force de levage sur l'élément réactif à l'air (19) et par conséquent une partie d'arête extérieure (23) pour tourner l'écran de visée (12) par rapport à la base de support (14).

2. Ensemble de visée (10) selon la revendication 1, dans lequel le passage de fourniture de gaz (25) comprend une plaque d'infusion (34), la plaque d'infusion (34) comprenant la partie d'entrée, la partie de sortie et une partie courbée positionnée entre elles, dans lequel la partie d'entrée, la partie courbée et la partie de sortie forment un canal de sortie d'air (36) couplé par voie fluidique.

3. Ensemble de visée (10) selon la revendication 2, dans lequel la partie d'entrée et la partie de sortie sont chacune droites, dans lequel une intersection d'un axe longitudinal de la partie d'entrée et d'un axe longitudinal de la partie de sortie forme un angle obtus (100).

4. Ensemble de visée (10) selon la revendication 3, comprenant en outre une pluralité d'éléments réactifs à l'air (19), la plaque d'infusion (34) comprenant une pluralité de canaux de sortie d'air (36) configurés pour fournir du gaz de la source de gaz pour interagir avec la pluralité d'éléments réactifs à l'air (19).

5. Ensemble de visée (10) selon la revendication 4, comprenant en outre une ouverture de gaz (28) pouvant être couplée à la source de gaz et en communication fluidique avec la plaque d'infusion (34).

6. Ensemble de visée (10) selon la revendication 5, dans lequel l'ouverture de gaz (28) est perpendiculaire à l'écran de visée (12) et les canaux de sortie d'air (36) sont sensiblement parallèles à l'écran de visée (12).

7. Ensemble de visée (10) selon la revendication 6, comprenant en outre au moins un orifice d'évacuation (58) positionné le long de la partie d'arête extérieure (23) de l'écran de visée (12), dans lequel l'au moins un orifice d'évacuation (58) est configuré pour évacuer au moins une partie du gaz fourni par les canaux de sortie d'air (36).

8. Ensemble de visée (10) selon la revendication 7, dans lequel au moins une partie de la pluralité d'éléments réactifs à l'air (19) est sensiblement coplanaire.

9. Ensemble de visée (10) selon la revendication 8, dans lequel l'écran de visée (12) comprend :
un bord (74) présentant une première surface à proximité de la base de support (14) et une seconde surface en regard de la première surface, la pluralité d'éléments réactifs à l'eau (19) étant formée dans le bord (74) ; et
un volet transparent (43) retenu par fixation sur le bord (74) et positionné à côté de la seconde surface.

10. Ensemble de visée (10) selon la revendication 1, dans lequel l'élément réactif à l'air (19) comprend une surface portante.

11. Ensemble de visée (10) selon la revendication 1, dans lequel une partie de la surface supérieure (48) présente un premier rayon de courbure et une partie de la surface inférieure (49) présente un second rayon de courbure, dans lequel les premier et second rayons de courbure sont différents.

12. Procédé de rotation d'un ensemble de visée (10) comprenant :
la fourniture d'un ensemble de visée (10) comprenant un élément réactif à l'air (19),
la fourniture d'un flux de gaz vers l'élément réactif à l'air (19) pour tourner l'ensemble de visée (10) ; et
la fourniture d'une sortie de gaz configurée pour recevoir au moins une partie du flux de gaz, dans lequel la sortie de gaz évacue au moins une partie du flux de gaz de l'ensemble de visée (10), **caractérisé en ce que**
la fourniture d'un flux de gaz vers l'élément réactif à l'air (19) pour tourner l'ensemble de visée (10) inclut la fourniture d'un flux de gaz sur une surface supérieure (48) et une surface inférieure (49) de l'élément réactif à l'air (19) simultanément, une courbure de la surface supérieure (48) différant d'une courbure de la surface inférieure (49) de sorte que le flux de gaz génère un différentiel de pression entre la surface supérieure (48) et la surface inférieure (49) pour créer une force de levage sur l'élément réactif à l'air (19) et tourner l'ensemble de visée (10).

13. Procédé selon la revendication 12, dans lequel l'élément réactif à l'air (19) comprend une surface portante.
